# EUROPÄISCHE PATENTSCHRIFT

(11) **EP 1 049 617 B1**
(45) Veröffentlichungstag und Bekanntmachung des Hinweises auf die Patenterteilung: **12.06.2002**
(21) Anmeldenummer: 99903628.8
(22) Anmeldetag: 14.01.1999
(51) Int. Cl.: B61G 11/16, F16F 7/12

(54) **AUFPRALLSCHUTZVORRICHTUNG FÜR SCHIENENFAHRZEUGE**
IMPACT PROTECTION DEVICE FOR RAIL VEHICLES
DISPOSITIF DE PROTECTION CONTRE LES CHOCS POUR VEHICULES SUR RAILS

(30) Priorität: 28.01.1998 DE 19803135; 05.03.1998 DE 19809489
(43) Veröffentlichungstag der Anmeldung: 08.11.2000
(73) Patentinhaber: Siemens Krauss-Maffei Lokomotiven GmbH, 80997 München (DE)
(72) Erfinder: SCHNEIDER, Sieghard, D-81247 München (DE)
(74) Vertreter: Zedlitz, Peter, Dipl.-Inf.
(86) Internationale Anmeldenummer: EP9900169
(87) Internationale Veröffentlichungsnummer: WO9938751

(56) Entgegenhaltungen:
- DE-A- 19 616 944
- FR-A- 1 341 396

## Beschreibung

Die Erfindung betrifft eine Aufprallschutzvorrichtung für Schienenfahrzeuge nach dem Oberbegriff des Anspruchs 1. Eine derartige Vorrichtung ist aus der Druckschrift FR 1 341 396 A bekannt.

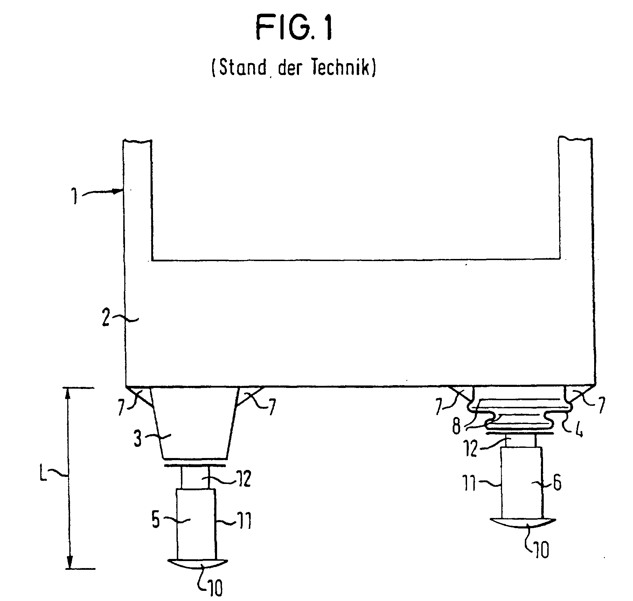

Durch offenkundige Vorbenutzung (Präsentation am 10.12.1996 durch die Anmelderin) ist eine Aufprallschutzvorrichtung für Schienenfahrzeuge bekannt geworden, wie sie in der deutschen Patentanmeldung mit dem Aktenzeichen 196 35 221.5 in Fig. 1 dargestellt ist (siehe auch die beiliegende Fig. 1). Es handelt sich hierbei um Energieverzehrelemente mit kastenartigem Aufbau und viereckiger Querschnittsform, die zwischen dem Hauptrahmen des Schienenfahrzeugs und den Pufferelementen angeordnet sind. Diese Energieverzehrelemente dienen zur Kompensation von das Energieaufnahmevermögen der Pufferelemente überschreitender Aufprallenergie. Die benutzte Ausführungsform zeichnet sich dadurch aus, daß die Querschnittsform des jeweils zwischen Pufferelement und Hauptrahmen angeordneten Energieverzehrelementes in Form eines geschlossenen, kastanartigen Trägers sich vom Pufferelement zum Hauptrahmen stetig erweitert. Bei dem Pufferelement handelt es sich um einen als Hülsenpuffer bekannten Standardpuffer, wie er an sich aus dem Stand der Technik bekannt ist. Ein derartiger Hülsenpuffer besteht im wesentlichen, wie aus Fig. 1 der eingangs genannten Patentanmeldung ersichtlich ist aus einem Pufferteller 10, der auf einer äußeren Hülse 11 befestigt ist und die ein inneres Teil 12 überstülpt. Das Außenteil 11 und das Innenteil 12 sind ineinander verschiebbar und innerhalb des Teils 12 ist ein Energieverzehrelement, beispielsweise als Reibungsfeder, gegebenenfalls mit einer zusätzlichen Hydraulikkapsel angeordnet.

Nachteilig an der bekannten Aufprallschutzvorrichtung ist, daß durch das "Hintereinanderschalten" des bekannten Energieverzehrelementes mit einem Standardpuffer bezogen auf die Gesamtlänge L der Aufprallschutzvorrichtung, vergleichsweise wenig aktive Länge zur Verfügung steht, auf der eine Energieaufnahme erfolgen kann. Von der gesamten Länge des Standardpufferelements steht nur ein vergleichsweise geringer Hub zur Verfügung, der für das Ineinanderschieben des äußeren Teils 11 über das Element 12 zur Verfügung steht (Hub des Pufferelements). Außerdem ist zu berücksichtigen, daß bei dem Energieverzehrelement nicht die volle Länge zur Verfügung steht, sondern stets eine Restlänge im gestauchten Zustand verbleibt.

Demgegenüber soll mit der vorliegenden Erfindung bei gleicher Gesamtlänge L eine wesentlich größere aktive Länge zur Energieaufnahme zur Verfügung gestellt werden.

Hierbei ist zu berücksichtigen, daß nach neuesten internationalen Richtlinien für die Sicherheit von Schienenfahrzeugen (ERRI B 205/RP1) für Deformationszonen eine Mindestaufnahmeenergie von 1 MJ vorgegeben ist. Außerdem soll nach dieser Richtlinie ein Deformationsweg von 1 m nicht überschritten werden. Demgegenüber schreibt die UIC 566 eine Mindestfestigkeit für die Struktur des Schienenfahrzeugs von 2000 kN vor. Um die geforderte Mindestenergie von 1 MJ bei einem Kraftniveau unterhalb der 2000 kN aufzunehmen, ist eine Deformationslänge von mehr als 0,5 m erforderlich. Andernfalls müßte die gesamte Struktur des Schienenfahrzeugs für eine höhere Festigkeit ausgelegt werden. Es sind derzeit keine Aufprallschutzvorrichtungen bekannt, die eine Deformation größer als 0,5 m besitzen.

Die Lösung dieser Aufgabe erfolgt durch eine Aufprallschutzvorrichtung mit den Merkmalen des Patentanspruchs 1. Vorteilhafte Ausgestaltungen und Weiterentwicklungen sind in den Unteransprüchen 2 bis 11 angegeben.

Durch die gemäß Patentanspruch 1 vorgeschlagene Ausgestaltung eines kastenartigen Energieverzehrelements mit einer Einstülpung und einem in diese eintauchenden, passenden Pufferstößel kann das Energieverzehrelement im Vergleich zum Stand der Technik wesentlich länger ausgebildet werden, so daß insgesamt eine wesentlich größere aktive Länge zum Energieverzehr zur Verfügung steht. Um diese vollständig ausnutzen zu können, darf die Einstülpung beim Falten des Energieverzehrelements nicht an den Hauptrahmen anstoßen, wozu dieser mit passenden Ausnehmungen versehen ist.

In den Unteransprüchen 2 bis 7 finden sich vorteilhafte Ausgestaltungen des Energeiverzehrelements, die eine erhöhte Stabilität gegenüber seitlichen Kräften und Momenten sowie gegenüber exzentrischen Längskräften aufweisen und die sich bei einem Aufprall nur durch axiale Faltenbildung verformen. Dabei wird die Erkenntnis ausgenutzt, daß bei einer durch einen Aufprall in dem Kasten ausgelösten Deformation, diese sich zunächst im Bereich des Kastenendes einstellt, wo der Kasten den geringeren Querschnitt aufweist. Da sich der Verformungswiderstand des Kastens aufgrund des zum Hauptrahmen zunehmenden Querschnitts progressiv erhöht, stellt sich eine vom Kastenende zum Hauptrahmen axial fortlaufende Faltenbeulung ein, so daß ein unkontrollierbares Einknicken, wie dies bei einem Kasten mit konstanter Querschnittsform eintreten könnte, ausgeschlossen werden kann. In einer bevorzugten Ausführungsform von Unteranspruch 3 hat der Kasten zumindest im Bereich des Hauptrahmens die Form eines Rechtecks, bei dem die längeren Seiten horizontal gelegen sind. Damit lassen sich die Seitenstützkräfte des Energieverzehrelementes erhöhen. Zur weiteren Steigerung der Seitenstützkräfte können gemäß den Unteransprüchen 4 und 5 seitliche Aussteifungen vorgesehen werden, die ferner ein progressives Ansteigen des Widerstandes gegen axiales Faltenbeulen bewirken. Im weiteren wird damit ein Übergreifen der Verformung auf die Folgestruktur (Hauptrahmen) weitgehend vermieden. Zur weiteren Sicherstellung einer vom Kastenende zum Hauptrahmen progressiv sich fortsetzenden Deformation durch axiales Faltenbeulen kann gemäß Unteranspruch 7 die Struktur des Kastens bzw. Energieverzehrelementes in definierten Bereichen mit Schwachstellen, z.B. in Form von Einkerbungen in der Wandung des Kastens, versehen sein. Durch die Schwachstellen kann vorgegeben werden, an welcher Stelle und in welcher Reihenfolge sich die Wandungen des Kastens durch parallel aufeinanderfolgende Faltungen verformen sollen. Vorzugsweise sind die definierten Schwächungen der Struktur des Kastens nur im vorderen Bereich des Kastens angeordnet oder nehmen zum hinteren Bereich in Richtung des Hauptrahmens ab. Die vorbeschriebenen konstruktiven Maßnahmen erhöhen die Sicherheit, so daß die Deformation des Kastens nur durch das mit einem hohen Energieverzehr einhergehende axiale Faltenbeulen (Stauchverformung) erfolgt, wobei auch bei außerzentrischer Einleitung der Aufprallenergie ein unkontrolliertes und nur einen geringen Energieverzehr bewirkendes Einknicken (Biegeverformung) des Kastens weitestgehend ausgeschlossen werden kann.

Die Ausgestaltung gemäß den Unteransprüchen 8 bis 10 hat den besonderen Vorteil, daß nach einer Deformation des Energieverzehrelements nur der äußere Kasten ausgetauscht und ersetzt werden muß, während die Einstülpung und der Pufferstößel, gegebenenfalls als separates Pufferelement, wiederverwendet werden kann.

Die Erfindung soll nachfolgend anhand von Ausführungsbeispielen und unter Bezugnahme auf die Fig. 2 bis 10 näher erläutert werden. Es zeigen:
- Fig. 1:: Aufprallschutzvorrichtung nach dem Stand der Technik im ungestauchten (links) und im gestauchten (rechts) Zustand.
- Fig. 2:: eine erste Ausführungsform der Erfindung mit einem kastenförmigen Energieverzehrelement, das über eine Einstülpung verfügt.
- Fig. 3:: eine zweite Ausführungsform der Erfindung mit einem kastenförmigen Energieverzehrelement und separater Einstülpung.
- Fig. 4,5:: verschiedene Ausführungsformen eines Flansches zur Befestigung des Einstülprohrs am Energieverzehrelement.
- Fig. 6:: maßstabgetreue vergleichende Darstellung der aktiven und inaktiven Längen beim Stand der Technik (unten) und bei der Erfindung (oben).
- Fig. 7:: tabellarischer Vergleich wichtiger Maße der Aufprallschutzvorrichtungen nach dem Stand der Technik und gemäß der Erfindung
- Fig. 8:: Aufprallschutzvorrichtung mit vorteilhafter Gestaltung des Crash-Elements (in Seitenansicht)
- Fig. 9:: Querschnitt im vorderen Bereich des Crash-Elements entlang der Linie A-A in Fig. 8
- Fig. 10:: Draufsicht auf ein Crash-Element mit Pufferstößel.

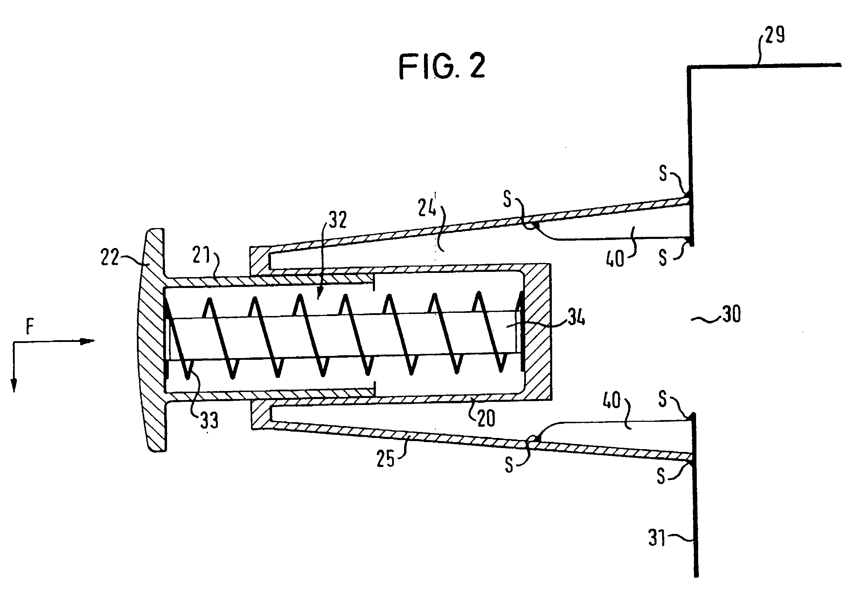

Nachfolgend wird die Erfindung anhand von Ausführungsbeispielen und unter Bezugnahme auf die Fig. 2 - 10 näher erläutert. Der Kern der in den Ausführungsbeispielen beschriebenen Erfindung liegt darin, daß jeweils vom Kastenende in Richtung des Hauptrahmens eine Einstülpung und ein an der Innenwand der Einstülpung verschiebbarer Pufferstößel vorgesehen ist. In dem von dem Pufferstößel und der Einstülpung gebildeten Hohlraum sind elastisch deformierbare Energieaufnahmeelemente, wie z.B. eine Reibungsfeder und/oder eine Hydraulikkapsel eingebaut. Somit wird eine größere aktive Länge zum Energieverzehr bei einem Aufprall zur Verfügung gestellt, als bei einer Hintereinanderanordnung eines Kastens und eines Standardhülsenpuffers.

Fig. 2 zeigt eine erste Ausführungsform der erfindungsgemäßen Aufprallschutzvorrichtung. Sie besteht aus einem kastenartigen Energieverzehrelement 25, das über eine in den Hohlraum 24 reichende Einstülpung 20 verfügt und das mittels Schweißnähten S an einem Querträger 31 des Hauptrahmens 29 befestigt ist. Die Einstülpung 20 nimmt einen Pufferstößel 21 auf, der einen Pufferteller 22 aufweist. Innerhalb des von der Einstülpung und dem Pufferstößel gebildeten Hohlraums befindet sich ein Energieaufnahmeelement 32, das über eine Reibungs- oder Ringfeder 33 und eine Hydraulikkapsel 34 verfügt. Der Bodenbereich der Einstülpung 20 und die Stirnseite des Kastenendes sind verstärkt ausgeführt. Das Energieverzehrelement 25 besteht aus einem Starkblech und weist vorzugsweise eine rechteckige, geschlossene Querschnittsform auf, wobei der Querschnitt nach hinten zum Hauptrahmen 29 konisch zunimmt und an diesem mit der Querschnittsform als waagerecht liegendes Rechteck befestigt ist. In dem Hohlraum 24 sind Führungsrippen 40 vorgesehen, die vorzugsweise sowohl an Ober- und Unterseite 36,37 als auch an den Seitenwänden 35 mittels Schweißnähten S angebracht sind. Im Falle eines Aufpralls des Schienenfahrzeugs mit Energie, die das Energieaufnahmevermögen des Energieaufnahmeelementes 32 überschreitet, erfolgt die weitere Aufnahme durch eine Verformung des Energieverzehrelementes 25. Durch die Ausnehmung 30 ist sichergestellt, daß die gesamte Länge des Energieverzehrelements 25 als verformbare Struktur ausgenutzt werden kann, da die Einstülpung 20 in diese Ausnehmung 30 eintauchen kann. Die Führungsrippen 40 stellen sicher, daß insbesondere bei außerzentrischen Stößen die Einstülpung 20 durch die Ausnehmung 30 hindurchtritt.

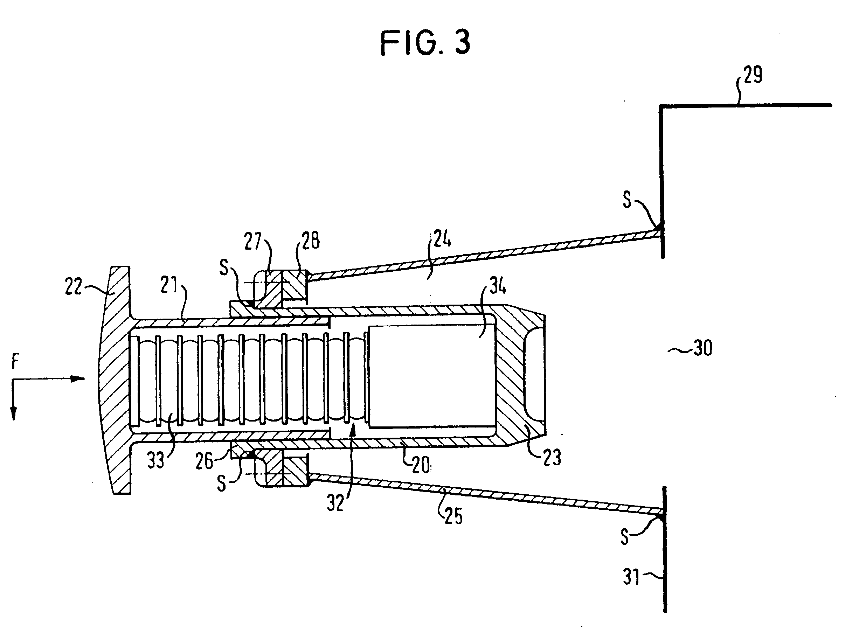

Fig. 3 zeigt eine zweite Ausführungsform einer erfindungsgemäßen Aufprallschutzvorrichtung mit einer separat angeordneten Einstülpung 20 (Pufferhülse) zur Aufnahme und Führung des verschiebbaren Pufferstößels 21, dessen Ende als Teller 22 ausgeführt ist oder mit einem separaten Pufferteller versehen ist. Das Bodenteil 23 der Pufferhülse kann je nach Anforderungen beispielsweise als Tellerboden ausgeführt sein, ist also verstärkt und gewichtsoptimiert. Bedarfsweise kann der Tellerboden außen angefast sein. Die Einstülpung 20 mit dem Pufferstößel 21 ist in den Hohlraum 24 des Energieverzehrelements 25 mit kastenartigem Aufbau und vorzugsweise viereckigem Querschnitt eingelassen. Um die Gesamtlänge L der Aufprallschutzvorrichtung möglichst optimal auszunutzen und möglichst viel aktive Länge zur Verfügung zu stellen, besitzt das Energieverzehrelement 25 gerade eine solche Länge, daß es am tellerseitigen Ende der Pufferhülse 20 endet und dort befestigt ist. Zur Befestigung der Pufferhülse 20 mit dem Energieverzehrelement 25 können Schweißverbindungen und /oder lösbare Verbindungen, beispielsweise Schraubverbindungen, dienen. In der Ausführungsform gemäß Fig. 3 ist das tellerseitige Ende der Pufferhülse 20 als verstärktes Teil 26 ausgebildet, das über eine größere Wandstärke verfügt als die Pufferhülse 20 selbst. Ein Flansch 27 ist über die Pufferhülse 20 gezogen und an dem verstärktem Endstück 26 mittels einer umlaufenden Schweißnaht befestigt. Das Kopfstück 28 des deformierbaren Energieverzehrelementes 25 verfügt über eine Ausnehmung, durch die das gesamte Pufferelement in den Hohlraum 24 des Energieverzehrelements eingeführt werden kann, bis der Flansch 27 an den Außenflächen des Kopfstücks 28 anliegt. Das Pufferelement kann dann mit dem Energieverzehrelement verschraubt werden. Die gesamte Aufprallschutzvorrichtung ist mittels Schweißnähten S an dem Hauptrahmen 29 bzw. dessen Kopfteil des Schienenfahrzeugs befestigt. Das Energieverzehrelement 25 besteht aus einem Starkblech und hat einen kastenförmigen Aufbau mit vorzugsweise rechteckiger geschlossener Querschnittsform; die bevorzugte Ausführungsform dieses Energieverzehrelementes entspricht dem in der deutschen Patentanmeldung 196 35 221.5, der Querschnitt dieses Energieverzehrelementes nimmt also nach hinten zum Hauptrahmen 29 konisch zu und ist an diesem mit der Querschnittsform als waagerecht liegendes Rechteck befestigt. Die Befestigung kann als Schweißnaht S ausgebildet sein; ebenso kann die Verbindung lösbar ausgeführt sein. An den Verbindungsstellen zum Hauptrahmen 29 kann das Energieverzehrelement 25 mit Anschlußplatten versehen sein. Im konisch erweiterten Bereich können zusätzlich seitliche Aussteifungen in Form von Stützrippen vorgesehen werden. Im Falle eines Aufpralls des Schienenfahrzeugs mit einer Energie, die das Energieaufnahmevermögen des Pufferelements (20,21 und 22) überschreitet, erfolgt die weitere Energieaufnahme durch eine Verformung des Energieverzehrelementes 25. Um die gesamte Länge des Energieverzehrelements 25 als verformbare Struktur ausnutzen zu können, ist eine Ausnehmung 30 im Querträger 31 vorgesehen, durch die das Pufferelement hindurchtreten kann. Durch die konstruktive Gestaltung des Energieverzehrelementes 25 gemäß der bevorzugten Ausführungsform ist weitestgehend sichergestellt, daß dieses auch bei außerzentrischer Einleitung der Aufprallenergie nicht einknickt (Biegeverformung), sondern sich durch axiales Faltenbeulen verformt. Diese durch Stauchung hervorgerufene Verformung bewirkt eine parallele Faltung der Wandungen des Energieverzehrelementes 25 nach Art eines Faltenbalges.

Bei den in Fig. 2 und 3 dargestellten und zuvor erläuterten Ausführungsformen kann fast die gesamte Länge L, über die sich die Aufprallvorrichtung erstreckt, als aktive Länge ausgenutzt werden. Insgesamt nimmt also ein- und dieselbe Struktur Betriebskräfte auf und enthält gleichzeitig die deformierbare Struktur zur Energieaufnahme. Durch den größeren zur Verfügung stehenden Verformungsweg erfolgt bei gleicher Energieverzehrung eine geringere Krafteinleitung in das Schienenfahrzeug. Die Lokstruktur kann somit leichter dimensioniert werden; ebenso können alle Einbauten auf geringere Schockbelastungen ausgelegt werden. Insgesamt ergibt sich damit auch eine Gewichtseinsparung. Das Energieverzehrelement 25 kann alternativ zu der obenbeschriebenen Ausführungsform auch in Form eines Stülprohres ausgebildet sein.

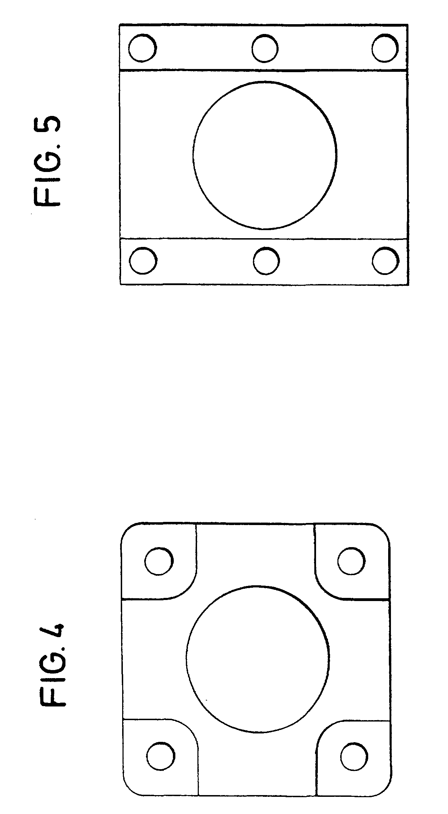

In Fig. 4 und Fig. 5 sind zwei Varianten des Flansches 27 in Aufsicht dargestellt. Der Flansch ist verstärkt und gewichtsoptimiert. Die Maße richten sich letztendlich nach dem Außendurchmesser der Pufferhülse 20.

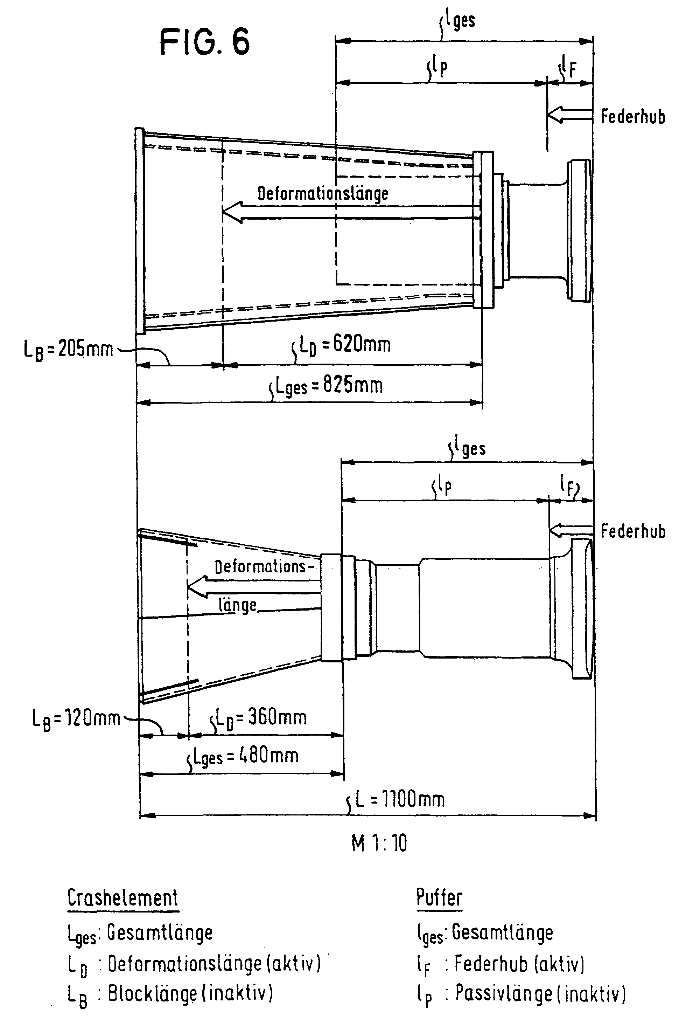

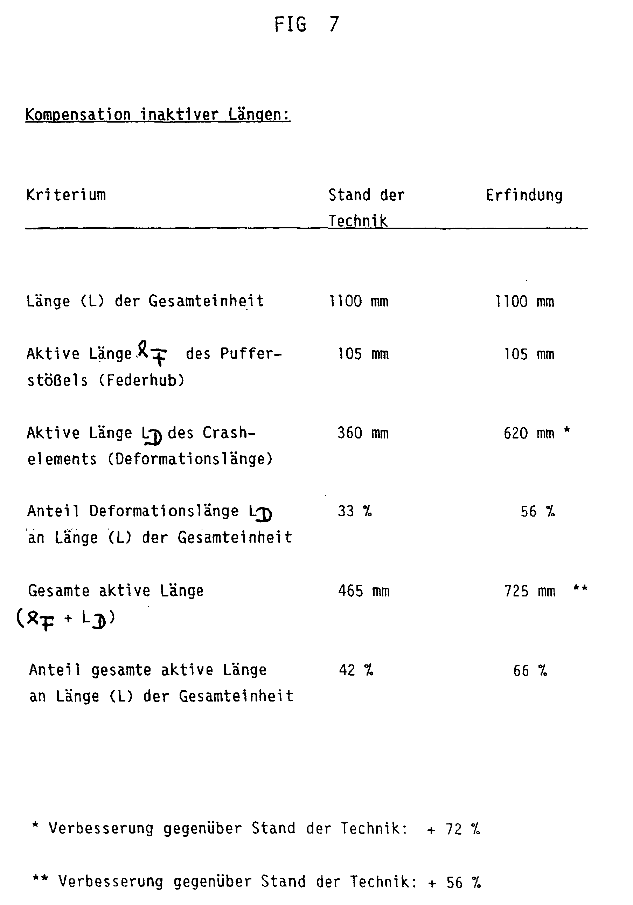

In Fig. 6 sind eine Aufprallschutzvorrichtung nach dem Stand der Technik (unten) und gemäß einem Ausführungsbeispiel der Erfindung (oben) maßstabsgetreu 1:10 gegenübergestellt, um die aktiven und inaktiven Längen direkt miteinander vergleichen zu können. Die wichtigsten Maße beider Aufprallschutzvorrichtungen sind zudem in der Tabelle von Fig. 7 aufgelistet. Der Anteil der aktiven Länge (Deformationslänge) des Crash-Elements 25 ist gegenüber dem Stand der Technik um 72 % erhöht worden. Im Hinblick auf die gesamte aktive Länge der Aufprallschutzvorrichtung (Deformationslänge plus Federhub) ergibt sich gegenüber dem Stand der Technik eine Verbesserung um 56%.

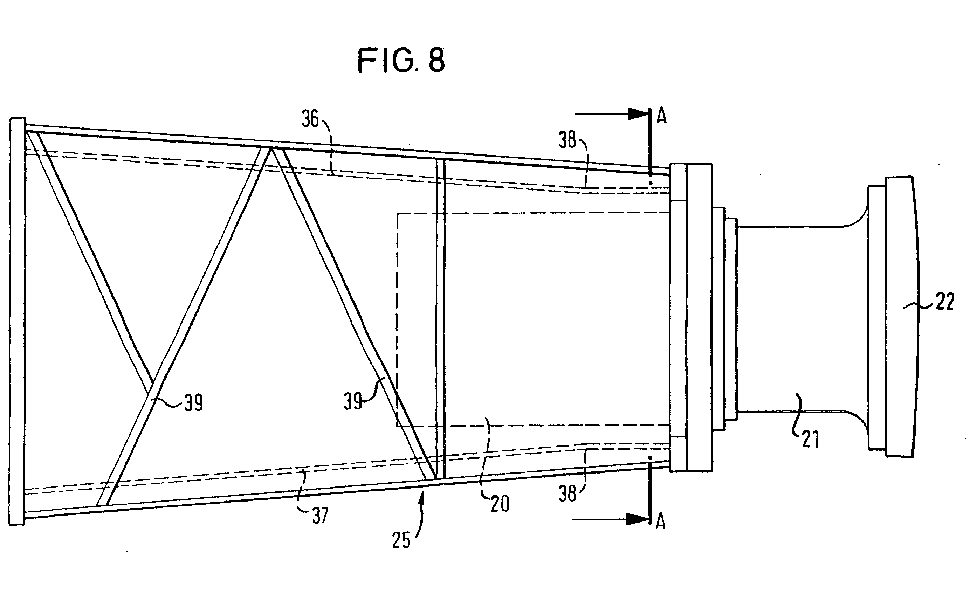

Die in Fig. 8 dargestellte Aufprallschutzvorrichtung zeigt eine vorteilhafte Ausgestaltung des Energieverzehrelements (Crash--Elements) 25. In dem dem Pufferteller zugewandten Endbereich des Energieverzehrelements 25 sind in dessen Oberseite 36 und Unterseite 37 jeweils ein leichter Knick 38 (Schwachstelle) vorgesehen. Damit wird zum einen die Spitzenkraft reduziert, bei der ein Verformen des Energieverzehrelements 25 einsetzt, so daß im Falle eines Aufpralls des Schienenfahrzeugs mit Energie, die das Energieaufnahmevermögen des Energieaufnahmeelements 32 überschreitet, das Schienenfahrzeug einer geringeren maximalen Krafteinleitung ausgesetzt wird. Zum anderen wird damit der Ort der ersten Falte festgelegt, so daß an dieser Stelle die axiale Faltenbeulung initiiert wird. Mit einer zusätzlichen seitlichen Verrippung 39 wird der Faltungswiderstand erhöht und ein vorteilhafter Kraft-Weg-Verlauf vorgegeben.

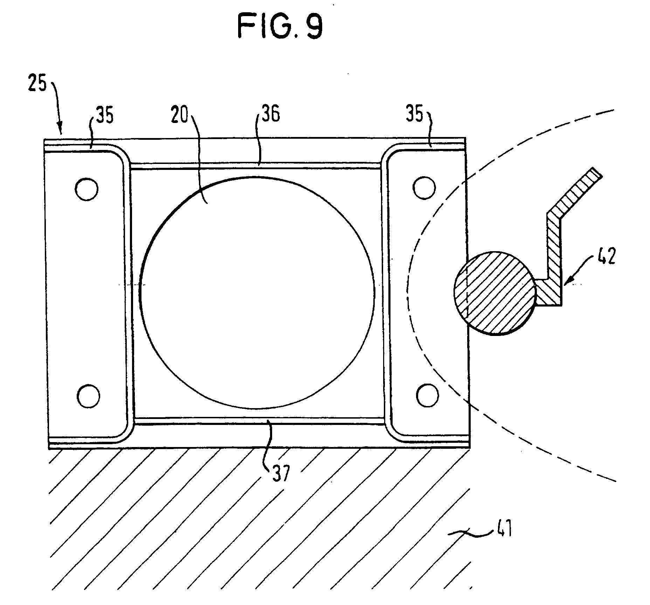

Fig. 9 zeigt den Querschnitt der Aufprallschutzvorrichtung aus Fig. 8 entlang der Linie A-A in Fig. 8. Das Energieverzehrelement 25 ist mit U-förmigen Seitenwänden 35 ausgebildet, so daß vorgeschriebene Freiräume eingehalten werden können. Somit steht beispielsweise genügend Freiraum (gestrichelte Linie) für die Anordnung eines Drucklufthahns 42 und dessen Betätigung zur Verfügung. Außerdem wird durch den bevorzugten kastenförmigen Aufbau des Energieverzehrelements 25 mit rechteckigem Querschnitt, der nach hinten zum Hauptrahmen konisch zunimmt, sichergestellt, daß im Bereich des Puffers der nach der Eisenbahnbetriebsordnung (EBO) vorgeschriebene freie Durchgang 41 unterhalb des Puffers eingehalten werden kann.

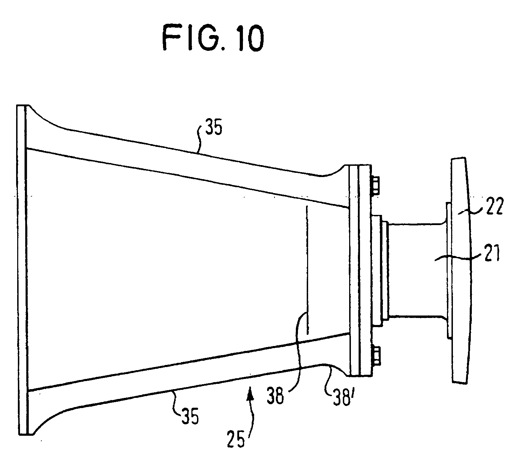

In Fig. 10 ist die erfindungsgemäße Aufprallschutzvorrichtung in Draufsicht dargestellt. Das Energieverzehrelement 25 verfügt über den bevorzugten kastenförmigen Aufbau mit rechteckigem und sich konisch zum Hauptrahmen vergrößernden Querschnitt und ist mit U-förmigen Seitenwänden 35 ausgestattet. Definierte Schwachstellen (38,38') zur Auslösung der axialen Faltenbeulung befinden sich in der Ober- und Unterseite (36,37) und an den Seitenwänden 35. Nicht dargestellt sind die im Inneren des Energieverzehrelements 25 liegenden Teile des Puffers. Lediglich der aus der Einstülpung bzw. Pufferhülse 20 herausragende Teil des Pufferstößels 21 und der Pufferteller 22 sind dargestellt.

### Bezugszeichenliste

- 1: Hauptrahmen
- 2: Querträger
- 3: Energieverzehrelement (Crash-Element) im ungestauchten Zustand
- 4: Energieverzehrelement (Crash-Element) im gestauchten Zustand
- 5,6: Pufferelemente, bestehend aus:
10 Pufferteller
11 Pufferhülse
12 Pufferinnenteil
- 7: seitliche Stützrippen
- 20: Einstülpung bzw. Pufferhülse
- 21: Pufferstößel
- 22: Pufferteller
- 23: Bodenteil der Pufferhülse
- 24: Hohlraum im Energieverzehrelement
- 25: Energieverzehrelement (Crash-Element)
- 26: verstärktes Endstück der Pufferhülse
- 27: Flansch
- 28: Kopfstück des Energieverzehrelements
- 29: Hauptrahmen bzw. Kopfstück
- 30: Ausnehmung im Querträger 31
- 31: Querträger
- 32: Energieverzehrelement des Puffers
- 33: Reibungs- oder Ringfeder
- 34: Hydraulikkapsel
- 35: U-förmige Seitenwand des Crash-Elements
- 36: Oberseite des Crash-Elements
- 37: Unterseite des Crash-Elements
- 38,38': definierte Schwachstellen
- 39: Rippen zur Erhöhung des Faltungswiderstandes
- 40: Führungsrippen für den Durchtritt der Einstülpung durch die Ausnehmung im Querträger
- 41: Freiraum unterhalb der Puffer (durch Eisenbahnbetriebsordnung vorgegeben)
- 42: Drucklufthahn mit Betätigungsgriff

## Patentansprüche

1. Aufprallschutzvorrichtung für ein Schienenfahrzeug mit einem Puffer aus einem Pufferstößel (21) mit angeformtem Pufferteller (22), einer Pufferhülse (20) und einem elastischen Energieaufnahmeelement (32) zwischen dem Pufferstößel (21) und der Pufferhülse (20),
wobei der Pufferstößel (21) in die Pufferhülse (20) eintauchbar angeordnet ist, **dadurch gekennzeichnet, daß** die Pufferhülse (20) als Einstülpung eines Energieverzehrelementes (25) ausgebildet ist, das kastenartig aufgebaut am Hauptrahmen (29) des Schienenfahrzeugs befestigt ist und sich zum Hauptrahmen (29) hin stetig erweitert, und daß am Hauptrahmen (29) eine Ausnehmung (30) zum Durchtritt der Pufferhülse (20) angeordnet ist.

2. Vorrichtung nach Anspruch 1,
**dadurch gekennzeichnet, dass** das Energieverzehrelement (25) eine viereckige Querschnittsform hat.

3. Vorrichtung nach Anspruch 2, **dadurch gekennzeichnet, daß** das Energieverzehrelement zumindest im Bereich der Befestigung am Hauptrahmen einen rechteckigen Querschnitt aufweist, wobei vorzugsweise die längeren Seiten horizontal gelegen sind.

4. Vorrichtung nach einem der Ansprüche 1 bis 3, **dadurch gekennzeichnet, daß** mindestens im Bereich der Befestigung am Hauptrahmen seitliche Aussteifungen angeordnet sind.

5. Vorrichtung nach Anspruch 4, **dadurch gekennzeichnet, daß** sich die seitlichen Aussteifungen über die gesamte Länge des Energieverzehrelements erstrecken und mit dessen Seitenwänden jeweils einen U-förmigen Querschnitt bilden.

6. Vorrichtung nach Anspruch 5, **dadurch gekennzeichnet, daß** die seitlichen Aussteifungen und die Seitenwände des Energieverzehrelements jeweils einstückig sind und mit einem Ober- und einem Unterteil zu einem kastenartigen Aufbau verbunden sind, vorzugsweise mittels Schweißverbindungen.

7. Vorrichtung nach einem der Ansprüche 1 bis 6, **dadurch gekennzeichnet, daß** die Struktur der kastenartigen Energieverzehrelemente nach der Maßgabe mit Schwachstellen versehen ist, daß sich bei Aufprallbelastung vom Kastenende zum Hauptrahmen progressiv fortschreitend parallele Faltungen ergeben.

8. Vorrichtung nach einem der Ansprüche 1 bis 7, **dadurch gekennzeichnet, daß** die Einstülpung und der Kasten als separate Teile ausgeführt sind, wobei die Einstülpung lösbar am Kastenende befestigt ist, beispielsweise mittels Schraubverbindungen.

9. Vorrichtung nach Anspruch 8, **dadurch gekennzeichnet, daß** zur Befestigung der Einstülpung ein Flansch vorgesehen ist, der um die Einstülpung herum im Bereich des Kastenendes angeschweißt ist und der lösbar am Kastenende befestigt ist.

10. Vorrichtung nach Anspruch 8 oder 9, **dadurch gekennzeichnet, daß** die Einstülpung und der Pufferstößel als Pufferelement ausgebildet sind.

11. Vorrichtung nach einem der Ansprüche 1 bis 10, **dadurch gekennzeichnet, daß** die Einstülpung einen zylindrischen Querschnitt aufweist.

## Claims

1. Impact protection device for a rail vehicle with a buffer consisting of a buffer plunger (21) with attached buffer plate (22), a buffer box (20) and an elastic energy absorbing element (32) between the buffer plunger (21) and the buffer box (20), the buffer plunger (21) being arranged so that it can enter the buffer box (20), **characterized in that** the buffer box (20) is formed as an insertion area of an energy dissipating element (25), which having a box-like construction is mounted on the main frame (29) of the rail vehicle and is enlarged continuously towards the main frame (29), and that arranged on the main frame (29) is a recess (30) for the buffer box (20) to pass through.

2. Device according to claim 1, **characterized in that** the energy dissipating element (25) has a quadrilateral cross-sectional shape.

3. Device according to claim 2, **characterized in that** the energy dissipating element has a rectangular cross-section, at least in the area of attachment to the main frame, the longer sides preferably being positioned horizontally.

4. Device according to one of claims 1 to 3, **characterized in that** lateral reinforcements are provided at least in the area of attachment to the main frame.

5. Device according to claim 4, **characterized in that** the lateral reinforcements extend over the entire length of the energy dissipating element and together with its side walls form a U-shaped cross-section in each case.

6. Device according to claim 5, **characterized in that** the lateral reinforcements and the side walls of the energy dissipating element are each formed in one piece and connected to a top part and a bottom part to form a box-like structure, preferably by means of weld joints.

7. Device according to one of claims 1 to 6, **characterized in that** the structure of the box-like energy dissipating elements is provided with weak points to produce parallel folds progressing from the end of the box to the main frame in the event of a collision.

8. Device according to one of claims 1 to 7, **characterized in that** the insertion area and the box are executed as separate parts, the insertion area being mounted detachably on the end of the box, e.g. by means of screw connections.

9. Device according to claim 8, **characterized in that** a flange provided for attaching the insertion area is welded around the insertion area in the area of the end of the box and is mounted detachably on the end of the box.

10. Device according to claim 8 or 9, **characterized in that** the insertion area and the buffer plunger are formed as a buffer element.

11. Device according to one of claims 1 to 10, **characterized in that** the insertion area has a cylindrical cross-section.

## Revendications

1. Dispositif de protection contre les chocs pour un véhicule ferroviaire, comportant un tampon constitué d'un plongeur (21) de tampon sur lequel est formé un plateau (22) de tampon, d'un boisseau (20) de tampon et d'un élément (32) élastique d'absorption d'énergie entre le plongeur (21) de tampon et le boisseau (20) de tampon,
le plongeur (21) de tampon étant disposé avec possibilité d'enfoncement dans le boisseau (20) de tampon,
**caractérisé en ce que** le boisseau (20) de tampon est réalisé sous forme de retroussement d'un élément (25) de dispersion d'énergie qui est réalisé en forme de caisson fixé sur le châssis (29) principal du véhicule ferroviaire et s'élargissant continûment en direction du châssis (29) principal, et **en ce qu'**un évidement (30) est prévu sur le châssis (29) principal pour le passage du boisseau (20) de tampon.

2. Dispositif suivant la revendication 1, **caractérisé en ce que** l'élément (25) de dispersion d'énergie possède une forme de section quadrangulaire.

3. Dispositif suivant la revendication 2, **caractérisé en ce que** l'élément de dispersion d'énergie possède, au moins dans la région de la fixation sur le châssis principal, une section rectangulaire, les grands côtés étant de préférence placés à l'horizontale.

4. Dispositif suivant l'une des revendications 1 à 3, **caractérisé en ce que** des renforcements latéraux sont disposés au moins dans la région de la fixation sur le châssis principal.

5. Dispositif suivant la revendication 4, **caractérisé en ce que** les renforcements latéraux s'étendent sur toute la longueur de l'élément de dispersion d'énergie, et forment respectivement une section en U avec les parois latérales de cet élément.

6. Dispositif suivant la revendication 5, **caractérisé en ce que** les renforcements latéraux et les parois latérales de l'élément de dispersion d'énergie sont respectivement réalisés d'un seul tenant et sont assemblés avec une partie supérieure et une partie inférieure en une structure du genre caisson, de préférence au moyen d'assemblages soudés.

7. Dispositif suivant l'une des revendications 1 à 6, **caractérisé en ce que** la structure des éléments de dispersion d'énergie du genre caisson est dotée de points faibles de telle sorte qu'on obtient, lors d'un choc, des pliages parallèles se développant progressivement depuis l'extrémité du caisson vers le châssis principal.

8. Dispositif suivant l'une des revendications 1 à 7, **caractérisé en ce que** le retroussement et le caisson sont réalisés sous forme de pièces séparées, le retroussement étant fixé de manière amovible à l'extrémité du caisson, par exemple au moyen d'assemblages vissés.

9. Dispositif suivant la revendication 8, **caractérisé en ce qu'**une bride est prévue pour la fixation du retroussement, bride qui est soudée tout autour du retroussement dans la région de l'extrémité du caisson et qui est fixée de manière amovible à l'extrémité du caisson.

10. Dispositif suivant la revendication 8 ou 9, **caractérisé en ce que** le retroussement et le plongeur de tampon sont réalisés sous forme d'élément tampon.

11. Dispositif suivant l'une des revendications 1 à 10, **caractérisé en ce que** le retroussement possède une section cylindrique.
